# EUROPEAN PATENT SPECIFICATION

(11) **EP 3 048 713 B1**
(45) Date of publication and mention of the grant of the patent: **04.07.2018**
(21) Application number: 15193400.7
(22) Date of filing: 06.11.2015
(51) Int. Cl.: H02M 1/32, H02M 3/158

(54) **POWER SUPPLY APPARATUS**
STROMVERSORGUNGSVORRICHTUNG
APPAREIL D'ALIMENTATION ÉLECTRIQUE

(30) Priority: 26.01.2015 JP 2015011912
(43) Date of publication of application: 27.07.2016
(73) Proprietor: Murata Manufacturing Co., Ltd., Nagaokakyo-shi, Kyoto 617-8555 (JP)
(72) Inventor: Shiji, Hajime, Nagaokakyo-shi Kyoto, 617-8555 (JP)
(74) Representative: Thoma, Michael

(56) References cited:
- EP-A1- 2 330 728
- GB-A- 2 447 875

## Description

### BACKGROUND OF THE INVENTION

### 1. Field of the Invention

The present invention relates to a power supply apparatus which steps down a DC voltage.

### 2. Description of the Related Art

Japanese Patent No. 5611302 discloses an abnormality determination method executed when an abnormality occurs in a power supply apparatus such as a DC-DC converter connected to a DC power supply. In the determination method described in Japanese Patent No. 5611302, if a voltage detected at a predetermined position is less than a predetermined value, it is determined that an abnormality has occurred, that is, a circulation semiconductor element of the converter is in a short-circuit state or a switching element of the converter is in an open state.

In the power supply apparatus (DC-DC converter), the short-circuit or open abnormality of the element does not necessarily become a cause for a voltage abnormality, and, for example, the DC power supply connected to the power supply apparatus may become a cause for a voltage abnormality. However, in the determination method described in Japanese Patent No. 5611302, it is not possible to identify the DC power supply as a cause for a voltage abnormality, and appropriate measures cannot be taken after detection of a voltage abnormality in some cases.

GB 2447875 A discloses a power supply apparatus connectable to first and sector DC power supplies and including switching elements, an inductor and a capacitor and furthermore a control unit with a voltage detection unit and a current direction detection unit for detecting the direction of a current flow when the high-side switch is in the on-state. Furthermore, document EP 2 330 728 discloses a power supply control circuit capable of determining short circuit faults when a reference voltage is more than a threshold value and a switching control signal is in an on-state.

### SUMMARY OF THE INVENTION

Therefore, an object of the present invention is to provide a power supply apparatus which is able to identify a cause for a low voltage abnormality.

Said objective underlying the present invention is achieved by a power supply apparatus as defined by claim 1. Preferred embodiments are laid down in the dependent claims.

Accordingly,
the power supply apparatus includes: a first connection portion to which a first DC power supply is connected; a second connection portion to which a second DC power supply is connected; a first switching element and a second switching element sequentially connected in series between the first connection portion and ground; an inductor and a capacitor sequentially connected in series between a connection point between the first switching element and the second switching element and the ground; a control unit configured to turn ON/OFF the first switching element; a voltage detection unit configured to detect a voltage between a connection point between the inductor and the capacitor and the second connection portion; a current direction detection unit configured to detect a direction of a current flowing through the inductor; and a determination unit configured to determine that a low voltage abnormality has occurred, if the voltage detected by the voltage detection unit is equal to or lower than a predetermined value. If the direction of the current detected by the current direction detection unit is a direction from the first connection portion side toward the second connection portion, the determination unit determines that the second connection portion side is abnormal. If the direction of the current detected by the current direction detection unit is a direction from the second connection portion side toward the first connection portion, the determination unit determines that the second switching element is abnormal.

With this configuration, it is possible to identify whether a cause for a low voltage abnormality is the second switching element or the second DC power supply connected to the second connection portion, and thus it is possible to appropriately take measures after detection of the abnormality.

Preferably, the power supply apparatus further includes a third switching element connected between the connection point between the inductor and the capacitor and the second connection portion, and the control unit turns OFF the third switching element if the determination unit determines that the second switching element is abnormal.

With this configuration, if the second switching element is abnormal, for example, is broken due to short circuit (a conductive state occurs even when turned OFF), it is possible to prevent a current from flowing to the second switching element side.

In the power supply apparatus, the third switching element is preferably a bidirectional switching element including two MOS-FETs connected such that directions of body diodes thereof are opposite to each other.

With this configuration, even when the MOS-FETs are OFF, since the directions of the body diodes of the two MOS-FETs are opposite to each other, it is possible to block a current.

Other features, elements, characteristics and advantages of the present invention will become more apparent from the following detailed description of preferred embodiments of the present invention with reference to the attached drawings.

### BRIEF DESCRIPTION OF THE DRAWINGS

Fig. 1 is a circuit diagram of a power supply apparatus according to Embodiment 1;
Fig. 2 is a flowchart of a process of determining a low voltage abnormality of the power supply apparatus; and
Fig. 3 is a circuit diagram of a power supply apparatus according to Embodiment 2.

### DESCRIPTION OF THE PREFERRED EMBODIMENTS

### Embodiment 1

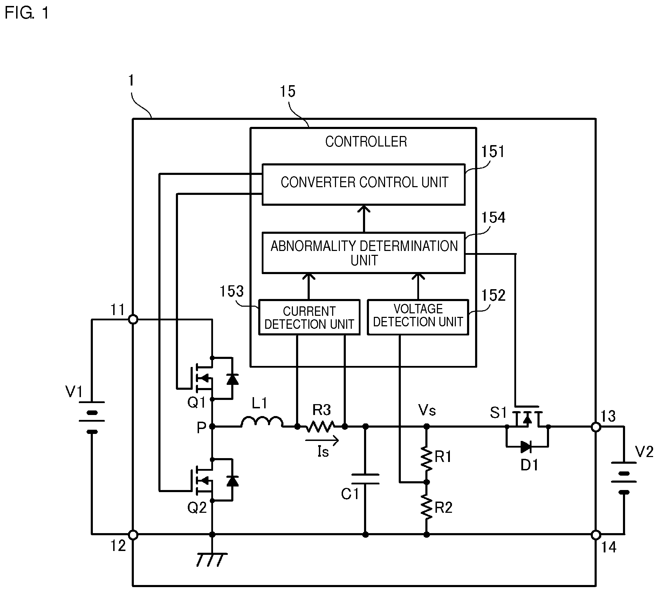

Fig. 1 is a circuit diagram of a power supply apparatus 1 according to Embodiment 1.

The power supply apparatus 1 includes external connection terminals 11, 12, 13, and 14. A DC power supply V1 is connected to the external connection terminals 11 and 12. A DC power supply V2 is connected to the external connection terminals 13 and 14. A connection line between the external connection terminals 12 and 14 is connected to ground. In the present embodiment, the power supply apparatus 1 is described as a step-down converter which steps down a DC voltage inputted through the external connection terminals 11 and 12 and outputs the stepped-down voltage from the external connection terminals 13 and 14.

The DC power supply V1 corresponds to a "first DC power supply" according to the present invention. The DC power supply V2 corresponds to a "second DC power supply" according to the present invention. In addition, the external connection terminal 11 corresponds to a "first connection portion" according to the present invention, and the external connection terminal 13 corresponds to a "second connection portion" according to the present invention.

Switching elements Q1 and Q2 are sequentially connected in series to the external connection terminals 11 and 12. The switching elements Q1 and Q2 are MOS-FETs. The switching element Q1 corresponds to a "first switching element" according to the present invention. The switching element Q2 corresponds to a "second switching element" according to the present invention. The switching element Q2 may be a diode. In this case, the cathode of the diode is connected to the switching element Q1.

An inductor L1 and a capacitor C1 are sequentially connected in series to a connection point P of the switching elements Q1 and Q2. A connection point between the inductorLl and the capacitorC1 is connected to the external connection terminal 13 via a switching element S1. The switching element S1 is a MOS-FET having a body diode D1 and corresponds to a "third switching element" according to the present invention. The switching element S1 is connected such that the drain thereof is at the external connection terminal 13 side.

The power supply apparatus 1 includes a controller 15. The controller 15 includes a converter control unit 151, a voltage detection unit 152, a current detection unit 153, and an abnormality determination unit 154.

The converter control unit 151 controls switching of the switching elements Q1 and Q2 to step down the DC voltage inputted through the external connection terminals 11 and 12. In the case where a diode is used instead of the switching element Q2, the converter control unit 151 controls switching of only the switching element Q1.

The voltage detection unit 152 detects a voltage at a connection point between the inductor L1 and the switching element S1, that is, a voltage value Vs of the DC voltage stepped down by a converter operation. Voltage-dividing resistors R1 and R2 connected in series are connected in parallel to the capacitor C1. The voltage detection unit 152 detects the voltage value Vs on the basis of voltages detected by the voltage-dividing resistors R1 and R2.

The current detection unit 153 detects a current value Is of a current flowing through the inductor L1. A resistor R3 for current detection is connected in series to the inductor L1. The current detection unit 153 detects the current value Is by measuring a voltage drop at both ends of the resistor R3. It is possible to determine the direction of the current flowing through the inductor L1, on the basis of the detected current value Is. If the current value Is is positive, the direction of the current is a direction from the connection point P to the external connection terminal 13. If the current value Is is negative, the direction of the current is a direction from the external connection terminal 13 to the connection point P.

The abnormality determination unit 154 determines presence/absence of a low voltage abnormality of the power supply apparatus 1 and a cause for the low voltage abnormality, and controls switching of the switching element S1. The abnormality determination unit 154 turns ON the switching element S1 at normal time. In a state where the switching element S1 is ON, the converter control unit 151 controls switching of the switching elements Q1 and Q2. By so doing, the DC voltage inputted through the external connection terminals 11 and 12 is stepped down and outputted from the external connection terminals 13 and 14. In the control state, the power supply apparatus 1 performs normal step-down operation.

In the normal step-down operation, the abnormality determination unit 154 determines whether the voltage value Vs detected by the voltage detection unit 152 is equal to or lower than a threshold Vth1. The threshold Vth1 is set, for example, on the basis of a voltage value of a voltage which should be outputted when the power supply apparatus 1 operates normally. If the voltage value Vs is equal to or lower than the threshold Vthl, the abnormality determination unit 154 determines that a low voltage abnormality has occurred. Then, the abnormality determination unit 154 determines the direction of the current flowing through the inductor L1, on the basis of the current value Is detected by the current detection unit 153. If the current value Is is positive, the abnormality determination unit 154 determines that the DC power supply V2 is a cause for the low voltage abnormality. If the current value Is is negative, the abnormality determination unit 154 determines that breakage of the switching element Q2 due to short circuit (a conductive state occurs between the drain and the source even when a positive gate voltage is applied) is a cause for the low voltage abnormality.

If the abnormality determination unit 154 determines that breakage of the switching element Q2 due to short circuit is a cause for the low voltage abnormality, the abnormality determination unit 154 turns OFF the switching element S1. If the switching element Q2 has been broken due to short circuit, the potential at the switching element Q2 side becomes low, so that a current flows from the DC power supply V2 to the switching element Q2. Thus, by turning OFF the switching element S1, it is possible to prevent a current flowing from the DC power supply V2 to the switching element Q2.

Since it is possible to identify which the DC power supply V2 or the switching element Q2 is a cause for the low voltage abnormality as described above, it is possible to take appropriate measures after detection of the low voltage abnormality. For example, if the switching element Q2 has been broken due to short circuit, it is possible to prevent a current from flowing into the switching element Q2. As a result, it is possible to suppress stress on the switching element Q2 and a peripheral component when an abnormality occurs. In addition, since a flowing current is suppressed, it is possible to safely take measures after detection of an abnormality.

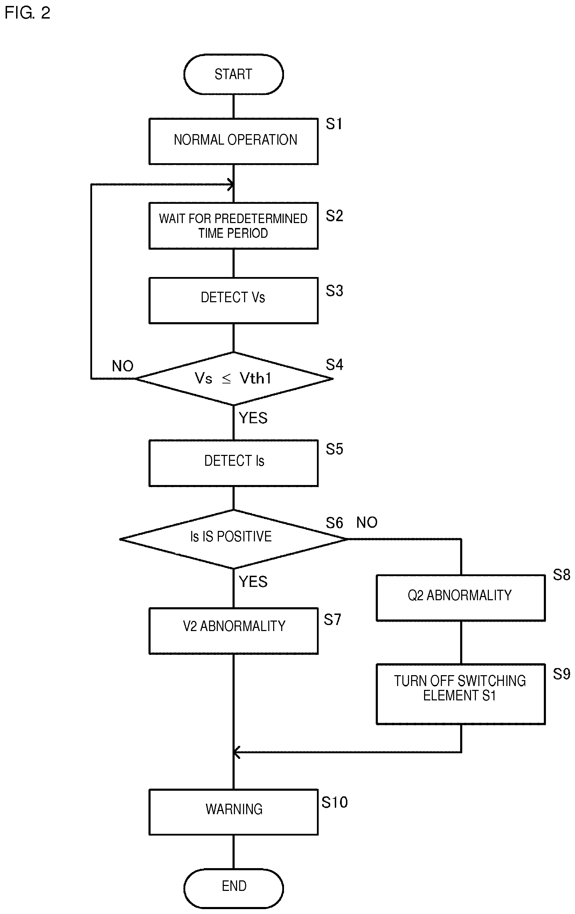

Fig. 2 is a flowchart of a process of determining a low voltage abnormality of the power supply apparatus 1. The process shown in Fig. 2 is executed by the controller 15.

The controller 15 executes a normal step-down operation (S1). That is, in a state where the switching element S1 is ON, the converter control unit 151 controls switching of the switching elements Q1 and Q2. By so doing, the DC voltage inputted through the external connection terminals 11 and 12 is stepped down and outputted from the external connection terminals 13 and 14. Next, the controller 15 waits for a predetermined time period (e.g., 10 ms) (S2). Thereafter, the voltage detection unit 152 detects the voltage value Vs (S3) .

The abnormality determination unit 154 determines whether the voltage value Vs is equal to or higher than the threshold Vth1 (Vs ≤ Vth1) (S4). If Vs ≤ Vth1 is not satisfied (S4: NO), the controller 15 executes the process in S2 again. If Vs ≤ Vth1 is satisfied (S4: YES), the current detection unit 153 detects the current value Is (S5), and determines whether the current value Is is positive (S6).

If the current value Is is positive (S6: YES), that is, if a current is flowing from the connection point P to the external connection terminal 13, the abnormality determination unit 154 determines that the DC power supply V2 is a cause for the low voltage abnormality (S7). On the other hand, if the current value Is is not positive (S6: NO), that is, if a current is flowing from the external connection terminal 13 to the connection point P, the abnormality determination unit 154 determines that breakage of the switching element Q2 due to short circuit is a cause for the low voltage abnormality (S8). Thereafter, the abnormality determination unit 154 turns OFF the switching element S1 (S9). By so doing, it is possible to prevent a current from flowing to the switching element Q2 side.

Thereafter, the controller 15 gives a warning, for example, by a status abnormality (S10) and ends this process.

### Embodiment 2

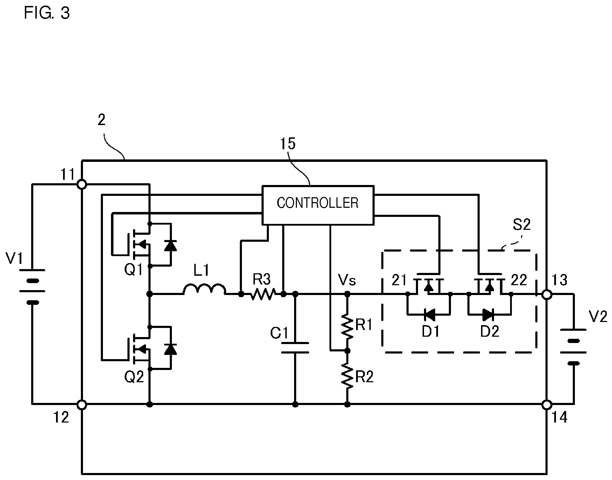

Fig. 3 is a circuit diagram of a power supply apparatus 2 according to Embodiment 2.

In this example, the switching element S2 connected between the inductor L1 and the external connection terminal 13 is a bidirectional switching element. The switching element S2 includes two MOS-FETs 21 and 22. The MOS-FETs 21 and 22 are connected such that the directions of body diodes D1 and D2 thereof are opposite to each other.

If the controller 15 determines that the DC power supply V2 is a cause for a low voltage abnormality, the controller 15 is able to prevent a current from flowing from the DC power supply V1 to the DC power supply V2, by turning OFF the MOS-FETs 21 and 22. By blocking a current to the DC power supply V2, it is possible to suppress a ripple effect of a failure of a component within the power supply apparatus 2 or a failure of a peripheral circuit.

The switching element S2 may be an IGBT (insulated gate bipolar transistor) not having a body diode formed therein, or a GaN-FET. In this case, it is possible to configure the switching element S2 as a single component, and thus space saving is achieved.

While preferred embodiments of the invention have been described above, it is to be understood that variations and modifications will be apparent to those skilled in the art without departing from the scope of the invention. The scope of the invention, therefore, is to be determined solely by the following claims.

## Claims

1. A power supply apparatus comprising:
a first connection portion (11) configured to be connected to a first DC power supply (V1);
a second connection portion (13) configured to be connected to a second DC power supply (V2);
a first switching element (Q1) and a second switching element (Q2) sequentially connected in series between the first connection portion (11) and ground;
an inductor (L1)and a capacitor (C1) sequentially connected in series between a connection point (P) between the first switching element (Q1) and the second switching element (Q2) and the ground;
a control unit (151) configured to turn ON/OFF the first switching element (Ql);
a voltage detection unit (152) configured to detect a voltage between a connection point between the inductor (L1) and the capacitor (C1) and the second connection portion (13) ;
a current direction detection (153) unit configured to detect a direction of a current flowing through the inductor (L1) if the voltage detected by the voltage detection unit (152) is equal to or lower than a predetermined value; and
a determination unit (154) configured to determine that a low voltage abnormality has occurred, if the voltage detected by the voltage detection unit (152) is equal to or lower than the predetermined value, wherein
if the direction of the current detected by the current direction detection unit (153) is a direction from the first connection portion side toward the second connection portion (13), the determination unit (154) determines that the second connection portion side is abnormal, and
if the direction of the current detected by the current direction detection unit (153) is a direction from the second connection portion side toward the first connection portion, the determination unit (154) determines that the second switching element is abnormal.

2. The power supply apparatus according to Claim 1, further comprising a third switching element (S1) connected between the connection point between the inductor (L1) and the capacitor (C1) and the second connection portion (13), wherein
the control unit (151) turns OFF the third switching element if the determination unit determines that the abnormality is in the second switching element.

3. The power supply apparatus according to Claim 2, wherein the third switching element (S1) is a bidirectional switching element including two MOS-FETs connected such that directions of body diodes (D1) thereof are opposite to each other.

4. The power supply apparatus according to any one of the preceding claims, wherein voltage dividing resistors (R1,R2) connected in series with each other, are connected in parallel to the capacitor (C1), wherein the voltage detection unit (152) is configured to detect the voltage value (Vs) on the basis of voltages detected by the voltage dividing resistors (R1,R2).

5. A power supply apparatus according to any one of the preceding claims, wherein a resistor (R3) for current detection is connected in series to the inductor (L1), wherein the current detection unit (153) is configured to detect the current (IS) flowing through the conductor (L1) by measuring a voltage drop at both ends of said resistor (R3) and to determine the direction of the current flowing through the conductor (L1) on the basis of the detected current value (IS).

6. The power supply apparatus according to claim 2, wherein the third switching element is an insulated gate bipolar transistor (IGBT) or a Gallium nitride field effect transistor (GaN-FET), wherein the switching element (S2) is configured as a single component.

## Patentansprüche

1. Stromversorgungsvorrichtung, aufweisend:
einen ersten Anschlussabschnitt (11), der eingerichtet ist, an eine erste Gleichstromversorgung (V1) angeschlossen zu werden;
einen zweiten Anschlussabschnitt (13), der eingerichtet ist, an eine zweite Gleichstromversorgung (V2) angeschlossen zu werden;
ein erstes Schaltelement (Q1) und ein zweites Schaltelement (Q2), die nacheinander in Reihe zwischen dem ersten Anschlussabschnitt (11) und Masse angeschlossen sind;
eine Spule (L1) und einen Kondensator (C1), die nacheinander in Reihe zwischen einer Anschlussstelle (P) zwischen dem ersten Schaltelement (Q1) und dem zweiten Schaltelement (Q2) und der Masse angeschlossen sind;
eine Steuerungseinheit (151), die eingerichtet ist, das erste Schaltelement (Q1) AN/AUS zu schalten;
eine Spannungsdetektionseinheit (152), die eingerichtet ist, eine Spannung zwischen einer Anschlussstelle zwischen der Spule (L1) und dem Kondensator (C1) und dem zweiten Anschlussabschnitt (13) zu detektieren;
eine Stromrichtungs-Detektionseinheit (153), die eingerichtet ist, eine Richtung eines durch die Spule (L1) fließenden Stroms zu detektieren, falls die von der Spannungsdetektionseinheit (152) detektierte Spannung kleiner gleich einem vorgegebenen Wert ist; und
eine Bestimmungseinheit (154), die eingerichtet ist, zu bestimmen, dass eine Anomalie geringer Spannung aufgetreten ist, falls die durch die Spannungsdetektionseinheit (152) detektierte Spannung kleiner gleich dem vorgegebenen Wert ist, wobei
falls die Richtung des von der Stromrichtungs-Detektionseinheit (153) detektierten Stroms eine Richtung von der Seite des ersten Anschlussabschnitt hin zu dem zweiten Anschlussabschnitt (13) ist, die Bestimmungseinheit (154) bestimmt, dass die Seite des zweiten Anschlussabschnitts anormal ist, und
falls die Richtung des von der Stromrichtungsdetektionseinheit (153) detektierten Stroms eine Richtung von der Seite des zweiten Anschlussabschnitts hin zu dem ersten Anschlussabschnitt ist, die Bestimmungseinheit (154) bestimmt, dass das zweite Schaltungselement anormal ist.

2. Stromversorgungsvorrichtung nach Anspruch 1,
ferner aufweisend ein drittes Schaltelement (s1), das zwischen der Anschlussstelle zwischen der Spule (L1) und dem Kondensator (C1) und dem zweiten Anschlussabschnitt (13) angeschlossen ist, wobei
die Steuerungseinheit (151) das dritte Schaltelement ausschaltet, falls die Bestimmungseinheit bestimmt, dass die Anomalie in dem zweiten Schaltelement vorliegt.

3. Stromversorgungsvorrichtung nach Anspruch 2,
wobei das dritte Schaltelement (S1) ein bidirektionales Schaltelement umfassend zwei MOSFETs ist, die derart verbunden sind, dass Richtungen von Gehäusedioden (D1) dieser einander entgegengesetzt sind.

4. Stromversorgungsvorrichtung nach einem der vorstehenden Ansprüche, wobei Spannungsteilerwiderstände (R1, R2), die miteinander in Reihe geschaltet sind, parallel mit dem Kondensator (C1) geschaltet sind, wobei die Spannungsdetektionseinheit (152) eingerichtet ist, den Spannungswert (Vs) auf Grundlage von von den Spannungsteilerwiderständen (R1, R2) detektierten Spannungen zu detektieren.

5. Stromversorgungsvorrichtung nach einem der vorstehenden Ansprüche, wobei ein Widerstand (R3) zur Stromdetektion in Reihe mit der Spule (L1) geschaltet ist, wobei die Stromdetektionseinheit (153) eingerichtet ist, durch Messen eines Spannungsabfalls an beiden Enden von besagtem Widerstand (R3) den Strom (IS) zu detektierten, der durch den Leiter (L1) fließt, und die Richtung des durch den Leiter (L1) fließenden Stroms auf Grundlage des detektieren Stromwerts (IS) zu bestimmen.

6. Stromversorgungsvorrichtung nach Anspruch 2,
wobei das dritte Schaltelement ein Bipolar-Transistor mit isoliertem Gate (IGBT) oder ein Galliumnitrid-Feldeffekttransistor (GaN-FET) ist, wobei das Schaltelement (S2) als einzelnes Bauteil ausgebildet ist.

## Revendications

1. Appareil d'alimentation électrique, comprenant :
une première portion de connexion (11) configurée pour être connectée à une première alimentation électrique en C.C. (V1) ;
une seconde portion de connexion (13) configurée pour être connectée à une seconde alimentation électrique en C.C. (V2) ;
un premier élément de commutation (Q1) et un deuxième élément de commutation (Q2) montés en série de manière séquentielle entre la première portion de connexion (11) et la masse ;
une bobine d'inductance (L1) et un condensateur (C1) montés en série de manière séquentielle entre un point de connexion (P) entre le premier élément de commutation (Q1) et le deuxième élément de commutation (Q2) et la masse ;
une unité de commande (151), configurée pour rendre PASSANT/BLOQUANT le premier élément de commutation (Q1) ;
une unité de détection de tension (152), configurée pour détecter une tension entre un point de connexion entre la bobine d'inductance (L1) et le condensateur (C1) et la seconde portion de connexion (13) ;
une unité de détection de direction de courant (153), configurée pour détecter une direction d'un courant circulant à travers la bobine d'inductance (L1) si la tension détectée par l'unité de détection de tension (152) est inférieure ou égale à une valeur prédéterminée, et
une unité de détermination (154), configurée pour déterminer qu'il s'est produit une anormalité de basse tension, si la tension détectée par l'unité de détection de tension (152) est inférieure ou égale à la valeur prédéterminée, dans lequel
si la direction du courant détectée par l'unité de détection de direction de courant (153) est une direction allant du côté de première portion de connexion vers la seconde portion de connexion (13), l'unité de détermination (154) détermine que le côté de seconde portion de connexion est anormal, et
si la direction du courant détectée par l'unité de détection de direction de courant (153) est une direction allant du côté de seconde portion de connexion vers la première portion de connexion, l'unité de détermination (154) détermine que le deuxième élément de commutation est anormal.

2. Appareil d'alimentation électrique selon la revendication 1, comprenant en outre un troisième élément de commutation (S1) connecté entre le point de connexion entre la bobine d'inductance (L1) et le condensateur (C1) et la seconde portion de connexion (13), dans lequel l'unité de commande (151) rend BLOQUANT le troisième élément de commutation si l'unité de détermination détermine que l'anormalité est dans le deuxième élément de commutation.

3. Appareil d'alimentation électrique selon la revendication 2, dans lequel le troisième élément de commutation (S1) est un élément de commutation bidirectionnel incluant deux transistors à effet de champ à semi-conducteur à oxyde métallique (MOSFET) connectés de telle sorte que des directions de diodes de corps (D1) de ceux-ci sont opposées entre elles.

4. Appareil d'alimentation électrique selon l'une quelconque des revendications précédentes, dans lequel des résistances de réduction de tension (R1, R2), montées en série l'une avec l'autre, sont montées en parallèle avec le condensateur (C1), dans lequel l'unité de détection de tension (152) est configurée pour détecter la valeur de tension (Vs) sur la base de tensions détectées par les résistances de réduction de tension (R1, R2).

5. Appareil d'alimentation électrique selon l'une quelconque des revendications précédentes, dans lequel une résistance (R3) pour la détection de courant est montée en série avec la bobine d'inductance (L1), dans lequel l'unité de détection de courant (153) est configurée pour détecter le courant (IS) circulant à travers le conducteur (L1) en mesurant une chute de tension aux deux extrémités de ladite résistance (R3), et pour déterminer la direction du courant circulant à travers le conducteur (L1) sur la base de la valeur de courant détectée (IS).

6. Appareil d'alimentation électrique selon la revendication 2, dans lequel le troisième élément de commutation est un transistor bipolaire à porte isolée (IGBT), ou un transistor à effet de champ à nitrure de Gallium (GaN-FET), dans lequel l'élément de commutation (S2) est configuré sous la forme d'un composant unique.
